# EUROPÄISCHE PATENTSCHRIFT

(11) **EP 3 803 294 B1**
(45) Veröffentlichungstag und Bekanntmachung des Hinweises auf die Patenterteilung: **11.12.2024**
(21) Anmeldenummer: 19719770.0
(22) Anmeldetag: 10.04.2019
(51) Int. Cl.: G01J 1/04, G01J 3/02, G02B 19/00, G02B 5/02

(54) **OPTISCHES ELEMENT ZUR LICHTKONZENTRATION UND HERSTELLUNGSVERFAHREN FÜR EIN OPTISCHES ELEMENT ZUR LICHTKONZENTRATION**
OPTICAL ELEMENT FOR LIGHT CONCENTRATION AND PRODUCTION METHOD FOR AN OPTICAL ELEMENT FOR LIGHT CONCENTRATION
ÉLÉMENT OPTIQUE DESTINÉ À CONCENTRER LA LUMIÈRE ET PROCÉDÉ DE FABRICATION POUR UN ÉLÉMENT OPTIQUE DESTINÉ À CONCENTRER LA LUMIÈRE

(30) Priorität: 24.05.2018 DE 102018208185
(43) Veröffentlichungstag der Anmeldung: 14.04.2021
(73) Patentinhaber: Robert Bosch GmbH, 70442 Stuttgart (DE)
(72) Erfinder: STEIN, Benedikt, 70193 Stuttgart (DE); HUSNIK, Martin, 70176 Stuttgart (DE); SCHITTNY, Robert, 0586 Oslo (DE); KRAEMMER, Christoph Daniel, 76137 Karlsruhe (DE)
(86) Internationale Anmeldenummer: PCT/EP2019/059038
(87) Internationale Veröffentlichungsnummer: WO 2019/223929

(56) Entgegenhaltungen:
- WO-A1-2007/072856
- DE-A1- 102016 112 750
- US-A- 3 780 357
- US-A1- 2006 072 222
- US-A1- 2014 307 447

## Beschreibung

Die Erfindung betrifft ein optisches Element zur Lichtkonzentration. Ebenso betrifft die Erfindung ein Spektrometer und ein Mobilgerät. Des Weiteren betrifft die Erfindung ein Herstellungsverfahren für ein optisches Element zur Lichtkonzentration.

### Stand der Technik

In der US 9,316,540 B1 ist als eine Ausführungsform ein Spektrometer beschrieben, welches als Lichteinfallsoptik/Frontaloptik eine lichtfokussierende Linse und eine Blende aufweist. Der Lichteinfallsoptik/Frontaloptik ist ein Diffusor nachgeordnet.

Weitere Beispiele des Standes der Technik sind aus den Dokumenten

US20060072222, WO2007072856, US2014307447, DE102016112750 und US3780357 zu entnehmen.

### Offenbarung der Erfindung

Die Erfindung schafft ein optisches Element zur Lichtkonzentration mit den Merkmalen des Anspruchs 1, ein Spektrometer mit den Merkmalen des Anspruchs 6, ein Mobilgerät mit den Merkmalen des Anspruchs 7 und ein Herstellungsverfahren für ein optisches Element zur Lichtkonzentration mit den Merkmalen des Anspruchs 8.

### Vorteile der Erfindung

Die vorliegende Erfindung ermöglicht eine Integration eines Diffusors in ein optisches Element zur Lichtkonzentration. Das erfindungsgemäße optische Element kann somit zusätzlich die Funktionen eines Diffusors erfüllen, wodurch ein herkömmlicherweise zusätzlich benötigter Diffusor einsparbar ist. Mittels der vorliegenden Erfindung sind deshalb optische Vorrichtungen mit einem optischen Element zur Lichtkonzentration realisierbar, wobei mittels des optischen Elements zur Lichtkonzentration diffuses Licht erzeugbar ist, obwohl die jeweilige optische Vorrichtung keinen herkömmlichen Diffusor aufweist. Durch das mittels der vorliegenden Erfindung bewirkte nachteillose Wegfallen des herkömmlichen Diffusors kann die jeweilige optische Vorrichtung kostengünstiger, leichter und/oder mit einem geringeren Bauraumbedarf hergestellt werden. Die vorliegende Erfindung erleichtert damit eine Miniaturisierung der jeweiligen optischen Vorrichtung.

Das mittels der vorliegenden Erfindung geschaffene optische Element kann als ein Diffusor-Konzentrator bezeichnet werden. Es kann vielseitig eingesetzt werden.

In der Erfindung hat das optische Element einen Licht-Transmissionskörper, der auf einer ersten Seite eine Lichteinsammelfläche mit einem ersten Flächeninhalt und auf einer zweiten Seite eine Lichtaustrittsfläche mit einem zweiten Flächeninhalt kleiner als dem ersten Flächeninhalt aufweist. Das optische Element kann somit vorteilhaft dazu genutzt werden, ein durch die Lichteintrittsöffnung einfallendes Licht auf eine verhältnismäßig kleine, der Lichtaustrittsöffnung nachgeordnete Eingangsapertur, wie beispielsweise einer Eingangsapertur eines Spektrometers, zu konzentrieren.

Außerdem ist mindestens eine sich von der Lichteinsammelfläche zu der Lichtaustrittsfläche erstreckende und den Licht-Transmissionskörper schneidende Mittellängsachse definierbar, wobei die Diffusivitätsverteilung des Licht-Transmissionskörpers bezüglich der Mittellängsachse rotationssymmetrisch ist. Der Licht-Transmissionskörper weist damit eine anisotrope Diffusivitätsverteilung auf, welche vorteilhaft sowohl zur Erzeugung von diffusem Licht als auch zur Konzentration des erzeugten diffusen Lichts ist. Zusätzlich liegt der erste Teilbereich mit der ersten Diffusivität an der Lichtaustrittsfläche und weist eine variierende Schichtdicke, welche an der Mittellängsachse minimal und an der mindestens einen reflektierenden Teiloberfläche maximal ist, auf, während der zweite Teilbereich mit zumindest der zweiten Diffusivität an der Lichteinsammelfläche liegt und eine variierende Schichtdicke, welche an der Mittellängsachse maximal und an der mindestens einen reflektierenden Teiloberfläche minimal ist, aufweist. Wie unten genauer erläutert wird, ist ein derartiger Licht-Transmissionskörper vergleichsweise einfach herstellbar.

Als optionale Weiterbildung kann der zweite Teilbereich des Licht-Transmissionskörpers eine Laminatstruktur aus um die Mittellängsachse verlaufenden Laminatschichten mit unterschiedlichen Diffusivitäten aufweisen. Auch ein derartiger Licht-Transmissionskörper ist relativ einfach herstellbar.

Vorzugsweise ist der Licht-Transmissionskörper zumindest teilweise aus mindestens einem für den vorgegebenen Wellenlängenbereich transmittierenden Matrixmaterial, welches mit den vorgegebenen Wellenlängenbereich streuenden Partikeln und/oder Gasblasen vermischt ist, als dem mindestens einen für den vorgegebenen Wellenlängenbereich diffusen Medium gebildet. Beispielsweise kann der Licht-Transmissionskörper PDMS, PMMA und/oder SU8 als das mindestens eine für den vorgegebenen Wellenlängenbereich transmittierende Matrixmaterial und/oder Titandioxid-Partikel, Siliziumdioxid-Partikel, Melaminharz-Partikel und/oder Polystyrol-Partikel als die den vorgegebenen Wellenlängenbereich streuenden Partikel aufweisen. Somit können kostengünstige und einfach verarbeitbare Materialien zum Herstellen des Licht-Transmissionskörpers eingesetzt werden.

In einer weiteren vorteilhaften Ausführungsform des optischen Elements ist der Licht-Transmissionskörper zumindest teilweise aus mindestens einem porösen Material als dem mindestens einen für den vorgegebenen Wellenlängenbereich diffusen Medium gebildet. Die lokale Diffusivität kann in diesem Fall einfach mittels einer variierenden Porengröße der in dem porösen Material ausgebildeten Poren variiert werden.

Die vorausgehend beschriebenen Vorteile werden beispielsweise bei einem Spektrometer mit einem derartigen optischen Element bewirkt. Wie unten genau erläutert wird, kann eine Vielzahl verschiedener Spektrometertypen mit dem entsprechenden optischen Element ausgestattet sein. Die vorliegende Erfindung ist somit vielseitig verwendbar.

Die oben beschriebenen Vorteile weist häufig auch ein Mobilgerät mit einem entsprechenden optischen Element und/oder einem derartigen Spektrometer auf. Da die vorliegende Erfindung eine Miniaturisierung von optischen Vorrichtungen erleichtert, trägt sie auch zur Miniaturisierung von Mobilgeräten/tragbaren Geräten, wie beispielsweise einem Mobiltelefon oder einem Smartphone, bei. Außerdem erleichtert die vorliegende Erfindung eine Integration einer mit dem erfindungsgemäßen optischen Element ausgestatteten optischen Vorrichtung/eines Spektrometers in das jeweilige Mobilgerät/tragbare Gerät.

Des Weiteren bewirkt auch ein Ausführen eines korrespondierenden Herstellungsverfahrens für ein optisches Element zur Lichtkonzentration die oben schon erläuterten Vorteile. Es wird ausdrücklich darauf hingewiesen, dass das Herstellungsverfahren gemäß den oben erläuterten Ausführungsformen des optischen Elements weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform eines optischen Elements zur Lichtkonzentration;
- Fig. 2: eine schematische Darstellung einer zweiten Ausführungsform eines optischen Elements zur Lichtkonzentration;
- Fig. 3: eine schematische Darstellung einer ersten Ausführungsform eines Spektrometers;
- Fig. 4: eine schematische Darstellung einer zweiten Ausführungsform eines Spektrometers; und
- Fig. 5a bis 5f: schematische Querschnitte zum Erläutern einer Ausführungsform eines Herstellungsverfahrens für ein optisches Element zur Lichtkonzentration.

### Ausführungsformen der Erfindung

Unter dem im Weiteren verwendeten Begriff "Diffusivität" ist ein Maß dafür zu verstehen, wie "gerichtet" sich Licht in einem von dem Licht transmittierten Körper aus mindestens einem diffusen Medium (ungerichtet) ausbreitet. Die Diffusivität ist direkt proportional zu einer mittleren freien Weglänge zwischen zwei Streuereignissen des transmittierenden Lichts. (Eine gerichtete Lichtgeschwindigkeit einzelner Photonen bleibt durch Streuereignisse unbeeinflusst.)

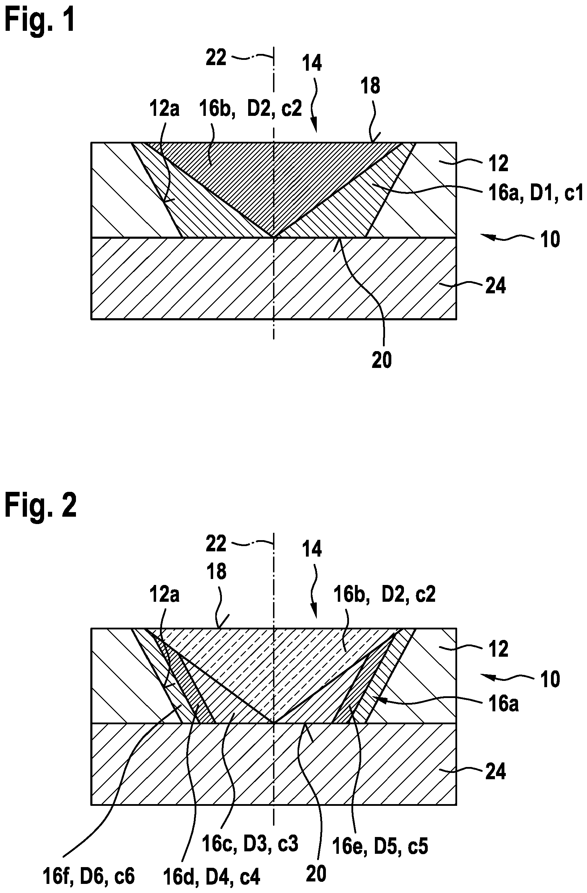

Fig. 1 zeigt eine schematische Darstellung einer ersten Ausführungsform des optischen Elements zur Lichtkonzentration.

Das in Fig. 1 schematisch dargestellte optische Element 10 ist zur Konzentration von Licht in einem vorgegebenen Wellenlängenbereich ausgelegt. Der jeweilige Wellenlängenbereich kann beispielsweise das optische Spektrum, ein Wellenlängenbereich von 400 nm (Nanometer) bis 1100 nm (Nanometer), ein Wellenlängenbereich von 780 nm (Nanometer) bis 1100 nm (Nanometer), ein Wellenlängenbereich von 1100 nm (Nanometer) bis 2500 nm (Nanometer), ein Wellenlängenbereich von 400 nm (Nanometer) bis 2500 nm (Nanometer) oder ein Wellenlängenbereich von 780 nm (Nanometer) bis 2500 nm (Nanometer) sein. Die hier aufgezählten Wellenlängenbereiche sind jedoch nur beispielhaft zu interpretieren.

Das optische Element 10 umfasst eine Haltehülse 12, welche derart geformt ist, dass ein Lichtdurchströmvolumen von mindestens einer reflektierenden Teiloberfläche 12a der Haltehülse 12 umrahmt ist. Unter der Haltehülse 12 ist vorzugsweise eine "stabilisierende" Haltehülse 12 zu verstehen. Die mindestens eine reflektierende Teiloberfläche 12a der Haltehülse 12, welche das Lichtdurchströmvolumen umrahmt, kann auch als eine "reflektierende Seitenwand" umschrieben werden. Beispielsweise kann die Haltehülse 12 (vollständig) aus mindestens einem (den vorgegebenen Wellenlängenbereich) reflektierenden Material, wie insbesondere einem Metall, einem Halbleiter, einem Kunststoff (wie PTFE/Polytetrafluorethylen oder Spectralon) und/oder einer Keramik (z.B. Accuratus Accuflect), gebildet sein. Ebenso kann mindestens eine (den vorgegebenen Wellenlängenbereich) reflektierende Schicht auf die mindestens eine reflektierende Teiloberfläche 12a der Haltehülse 12 aufgebracht sein. Die mindestens eine (den vorgegebenen Wellenlängenbereich) reflektierende Schicht kann insbesondere ein Schichtstapel aus mehreren (den vorgegebenen Wellenlängenbereich) reflektierenden Schichten oder ein Bragg-Spiegel sein.

Außerdem weist das optische Element 10 einen Licht-Transmissionskörper 14 auf, mit welchem das Lichtdurchströmvolumen vollständig gefüllt ist. Der Licht-Transmissionskörper 14 ist zumindest für den vorgegebenen Wellenlängenbereich transmittierend. Der Licht-Transmissionskörper 14 kann insbesondere zumindest für den vorgegebenen Wellenlängenbereich transparent sein. Zusätzlich ist der Licht-Transmissionskörper 14 zumindest teilweise aus mindestens einem für den vorgegebenen Wellenlängenbereich diffusen Medium gebildet, wobei der Licht-Transmissionskörper 14 zumindest einen ersten Teilbereich 16a mit (zumindest) einer ersten Diffusivität D1 und einen zweiten Teilbereich 16b mit (zumindest) einer von der ersten Diffusivität D1 abweichenden zweiten Diffusivität D2 aufweist. Aufgrund der Ausbildung des Licht-Transmissionskörpers 14 aus dem mindestens einen (für den vorgegebenen Wellenlängenbereich) diffusen Medium eignet sich das optische Element 10 vorteilhaft zur Erzeugung von diffusem Licht mit einer (im Wesentlichen) homogenen Winkelverteilung. Das optische Element 10 eignet sich somit für einen Einsatz in einer Vielzahl von optischen Systemen, welche eine möglichst homogene Intensitäts- und Winkelverteilung von Licht benötigen. Gleichzeitig kann das optische Element 10 aufgrund der unterschiedlichen Diffusivitäten D1 und D2 in den mindestens zwei Teilbereichen 16a und 16b seines Licht-Transmissionskörpers 14 zur Konzentration von Licht in dem vorgegebenen Wellenlängenbereich vorteilhaft eingesetzt werden. Es eignet sich insbesondere dazu, Licht in dem vorgegebenen Wellenlängenbereich von einer größeren Fläche auf eine kleinere Fläche zu konzentrieren und trotzdem dessen Ausgangswinkelverteilung zu homogenisieren. Das optische Element 10 kann deshalb als ein Diffusor-Konzentrator bezeichnet werden.

Gegenüber einer optischen Linse bietet das als Diffusor-Konzentrator bezeichenbare optische Element 10 eine Steigerung seiner "Lichteinsammeleffizienz" bei einer gleichzeitig äußerst geringen Bauhöhe des optischen Elements 10. Die Haltehülse 12/der Licht-Transmissionskörper 14 sind derart geformt, dass das Lichtdurchströmvolumen/der Licht-Transmissionskörper 14 auf einer ersten Seite eine Lichteintrittsöffnung/Lichteinsammelfläche 18 mit einem ersten Flächeninhalt und auf einer zweiten Seite eine Lichtaustrittsöffnung/Lichtaustrittsfläche 20 mit einem zweiten Flächeninhalt kleiner als dem ersten Flächeninhalt aufweisen. Ein als Bauhöhe des optischen Elements 10 bezeichenbarer Abstand zwischen der Lichteintrittsöffnung/ Lichteinsammelfläche 18 und der Lichtaustrittsöffnung/Lichtaustrittsfläche 20 kann z.B. kleiner als eine maximale Ausdehnung der Lichteintrittsöffnung/Lichteinsammelfläche 18 und/oder eine maximale Ausdehnung der Lichtaustrittsöffnung/Lichtaustrittsfläche 20 sein. Insbesondere kann der Abstand zwischen der Lichteintrittsöffnung/ Lichteinsammelfläche 18 und der Lichtaustrittsöffnung/Lichtaustrittsfläche 20 kleiner als eine Hälfte der maximalen Ausdehnung der Lichteintrittsöffnung/Lichteinsammelfläche 18 und/oder als eine Hälfte der maximalen Ausdehnung der Lichtaustrittsöffnung/ Lichtaustrittsfläche 20 sein.

Die Öffnungen/Flächen 18 und 20 können beispielsweise rund, elliptisch, quadratisch und/oder rechteckig sein. Das Lichtdurchströmvolumen/der Licht-Transmissionskörper 14 kann somit eine kegelstumpfförmige oder pyramidenstumpfförmige Geometrie aufweisen. Die Öffnungen/Flächen 18 und 20 können ebenso durch einen allgemeinen Polygonzug begrenzt sein. Der erste Flächeninhalt der Lichteintrittsöffnung/ Lichteinsammelfläche 18 kann beispielsweise zwischen 15 mm² (Quadratmillimeter) und 50 mm² (Quadratmillimeter) liegen. Der zweite Flächeninhalt der Lichtaustrittsöffnung/ Lichtaustrittsfläche 20 kann z.B. zwischen 3 mm² (Quadratmillimeter) bis 12 mm² (Quadratmillimeter) betragen. Beispielsweise kann ein Quotient aus dem ersten Flächeninhalt geteilt durch den zweiten Flächeninhalt in einem Bereich von 2 bis 8 liegen.

Aufgrund seiner vergleichsweise geringen Bauhöhe, seiner relativ kleinen Öffnungen/Flächen 18 und 20 und seiner Eignung als Diffusor-Konzentrator ermöglicht das optische Element 10 einen äußerst kompakten Aufbau einer damit ausgestatteten optischen Vorrichtung. Zusätzlich erleichtern die vorteilhaften Eigenschaften des optischen Elements 10 eine Miniaturisierung der damit ausgestatteten optischen Vorrichtung. Das als Diffusor-Konzentrator einsetzbare optische Element 10 kann beispielsweise für eine Eingangsapertur eines (miniaturisierten) Spektrometers verwendet werden.

In dem Beispiel der Fig. 1 weist der Licht-Transmissionskörper 14 eine Schichtstruktur aus nur den zwei Teilbereichen 16a und 16b mit unterschiedlichen Diffusivitäten D1 und D2 auf. Außerdem ist für das optische Element 10 eine sich von der Lichteintrittsöffnung/Lichteinsammelfläche 18 zu der Lichtaustrittsöffnung/Lichtaustrittsfläche 20 erstreckende und den Licht-Transmissionskörper 14 schneidende Mittellängsachse 22 definierbar, wobei die Diffusivitätsverteilung des Licht-Transmissionskörpers 14 bezüglich der Mittellängsachse 22 rotationssymmetrisch ist. Der erste Teilbereich 16a mit der ersten Diffusivität D1 liegt an der Lichtaustrittsfläche 20 und kann deshalb als Austrittsbereich 16a des Licht-Transmissionskörpers 14 bezeichnet werden. Der Austrittsbereich 16a weist eine (senkrecht zu der Lichtaustrittsfläche 20 ausgerichtete) variierende Schichtdicke auf, wobei die Schichtdicke des Austrittsbereichs 16a an der Mittellängsachse 22 minimal ist (z.B. gegen Null geht) und an der mindestens einen reflektierenden Teiloberfläche 12a maximal ist. Entsprechend weist der zweite Teilbereich 16b mit der zweiten Diffusivität D2, welcher an der Lichteinsammelfläche 18 liegt und als Eintrittsbereich 16b des Licht-Transmissionskörpers 14 bezeichenbar ist, ebenfalls eine (senkrecht zu der Lichteinsammelfläche 18 ausgerichtete) variierende Schichtdicke auf. Die (senkrecht zu der Lichteinsammelfläche 18 ausgerichtete) variierende Schichtdicke des Eintrittsbereichs 16b des Licht-Transmissionskörpers 14 ist an der Mittellängsachse 22 maximal und wird an der mindestens einen reflektierenden Teiloberfläche 12a der Haltehülse 12 minimal (z.B. gleich Null).

Bei dem in Fig. 1 gezeigten Licht-Transmissionskörpers 14 ist die zweite Diffusivität D2 größer als die erste Diffusivität D1. Der Licht-Transmissionskörper 14 der Fig. 1 weist damit eine anisotrope, richtungsabhängige Diffusivitätsverteilung auf, eine Konzentrierung des durch den Licht-Transmissionskörper 14 transmittierten Lichts von der größeren Lichteinsammelfläche 18 auf die kleinere Lichtaustrittsfläche 20, und evtl. auf eine dahinter angeordnete Eingangsapertur, bewirkt. Das optische Element 10 ist deshalb als Diffusor-Konzentrator gut einsetzbar. (In einem herkömmlichen Diffusor gewöhnlich eingesetzte diffuse Medien haben in der Regel eine isotrope Diffusivität/ Diffusivitätsverteilung. Eine Lichtausbreitung erfolgt deshalb in einem herkömmlichen Diffusor meistens in alle Richtungen "gleich schnell".)

Zur Festlegung/Einstellung der Diffusivitätsverteilung/der (lokalen) Diffusivitäten D1 und D2 in dem Licht-Transmissionskörper 14 können zufällig angeordnete Streuzentren genutzt werden, welche zur Mehrfachstreuung des durch den Licht-Transmissionskörper 14 transmittierenden Lichts und zur Randomisierung von dessen Ausbreitungsrichtung führen. (Die Streuzentren können auch als "dielektrische Streuer" umschrieben werden.) Die (lokale) Diffusivität D1 oder D2 ist (aufgrund ihrer Proportionalität zur mittleren freien Weglänge zwischen zwei Streuereignissen) umgekehrt proportional zu einer lokalen Konzentration c1 und c2 von in dem Licht-Transmissionskörper 14 zufällig angeordneten Streuzentren. In dem Beispiel der Fig. 1 weist der erste Teilbereich 16a mit der ersten Diffusivität D1 eine erste lokale Konzentration c1 von zufällig angeordneten Streuzentren auf, welche größer als eine zweite lokale Konzentration c2 von zufällig angeordneten Streuzentren des zweiten Teilbereichs 16b mit der zweiten Diffusivität D2 ist.

Vorzugsweise ist der Licht-Transmissionskörper 14 zumindest teilweise aus mindestens einem für den vorgegebenen Wellenlängenbereich transmittierenden/transparenten Matrixmaterial, welches mit den vorgegebenen Wellenlängenbereich streuenden Partikeln und/oder Gasblasen/Luftblasen (als Streuzentren) vermischt ist, (als dem mindestens einen für den vorgegebenen Wellenlängenbereich diffusen Medium) gebildet. (Wie oben schon erwähnt, haben diesem Fall die mindestens zwei Teilbereiche 16a und 16b des Licht-Transmissionskörpers 14 unterschiedliche Konzentrationen c1 und c2 von streuenden Partikeln und/oder Gasblasen.) Die mindestens zwei Teilbereiche 16a und 16b des Licht-Transmissionskörpers 14 können entweder aus dem mindestens einen gleichen Matrixmaterial oder aus unterschiedlichen Matrixmaterialien gebildet sein.) Beispielsweise können PDMS (Polydimethylsiloxan), PMMA (Polymethylmethacrylat) und/oder SU8 (Fotolack von Microchem Corp.) als das mindestens eine für den vorgegebenen Wellenlängenbereich transmittierende/transparente Matrixmaterial verwendet sein. Der Licht-Transmissionskörper 14 kann z.B. Titandioxid-Partikel (TiO2), Siliziumdioxid-Partikel (SiO2), Melaminharz-Partikel (MF) und/oder Polystyrol-Partikel als die den vorgegebenen Wellenlängenbereich streuenden Partikel aufweisen. Somit sind kostengünstige und leicht verarbeitbare Materialien zum Bilden des Licht-Transmissionskörpers 14 verwendbar.

Alternativ kann der Licht-Transmissionskörper 14 auch zumindest teilweise aus mindestens einem porösen Material (als dem mindestens einen für den vorgegebenen Wellenlängenbereich diffusen Medium) gebildet sein. Beispielsweise kann Silizium als das mindestens eine poröse Material eingesetzt sein. In diesem Fall können die mindestens zwei Teilbereiche 16a und 16b des Licht-Transmissionskörpers 14 unterschiedliche Konzentrationen c1 und c2 von Poren und/oder abweichende mittlere Porendurchmesser aufweisen. (Die mindestens zwei Teilbereiche 16a und 16b des Licht-Transmissionskörpers 14 können entweder aus dem mindestens einen gleichen porösen Material oder aus unterschiedlichen porösen Materialien gebildet sein.)

Die oben beschriebenen Komponenten des optischen Elements 10 können auf einem für den vorgegebenen Wellenlängenbereich transmittierenden/transparenten Substrat 24 angeordnet/ausgebildet sein. Das optische Element 10 kann jedoch auch ohne das Substrat 24 vorliegen.

Fig. 2 zeigt eine schematische Darstellung einer zweiten Ausführungsform eines optischen Elements zur Lichtkonzentration.

Der in Fig. 2 schematisch dargestellte Licht-Transmissionskörper 14 weist den oben schon beschriebenen Eintrittsbereich 16b mit der zweiten Diffusivität D2 auf, wobei der Eintrittsbereich 16b an der Lichteinsammelfläche 18 liegt und eine (senkrecht zu der Lichteinsammelfläche 18 ausgerichtete) variierende Schichtdicke hat, die an der Mittellängsachse 22 maximal ist und an der mindestens einen reflektierenden Teiloberfläche 12a der Haltehülse 12 minimal wird (z.B. gegen Null geht). Im Unterschied zu der zuvor beschriebenen Ausführungsform weist der Austrittsbereich 16c bis 16f des Licht-Transmissionskörpers 14 der Fig. 2 jedoch eine Laminatstruktur aus um die Mittellängsachse 22 verlaufenden Laminatschichten 16c bis 16f mit unterschiedlichen Diffusivitäten D3 bis D6 auf. (Der aus den Laminatschichten 16c bis 16f gebildete Austrittsbereich 16c bis 16f weist erneut eine (senkrecht zu der Lichtaustrittsfläche 20 ausgerichtete) variierende Schichtdicke auf, welche an der Mittellängsachse 22 minimal wird (z.B. gegen Null geht) und an der mindestens einen reflektierenden Teiloberfläche 12a maximal ist.) Die Diffusivitäten D3 bis D6 der Laminatschichten 16c bis 16f können so ausgebildet sein, dass jeweils eine Laminatschicht 16d mit einer Diffusivität D4 unter der zweiten Diffusivität D2 zwischen zwei Laminatschichten 16c und 16e mit jeweils einer Diffusivität D3 und D5 über der zweiten Diffusivität D2 liegt, und jeweils eine Laminatschicht 16e mit einer Diffusivität D5 über der zweiten Diffusivität D2 zwischen zwei Laminatschichten 16d und 16f mit jeweils einer Diffusivität D4 und D6 unter der zweiten Diffusivität D2 liegt. Vereinfacht können die Diffusivität D3 und D5 und/oder die Diffusivität D4 und D6 jeweils gleich sein. (Die bildliche Wiedergabe der "höheren" Diffusivität D3 in der Mitte des Austrittsbereichs 16c bis 16f ist nur beispielhaft; alternativ könnte auch eine "niedrigere" Diffusivität mittig ausgebildet sein. Entsprechend können auch entweder die lokalen Konzentrationen c3 und c5 kleiner als die lokale Konzentration c2 und die lokalen Konzentrationen c4 und c6 größer als die lokale Konzentration c2 sein oder die lokalen Konzentrationen c3 und c5 größer als die lokale Konzentration c2 und die lokalen Konzentrationen c4 und c6 kleiner als die lokale Konzentration c2 sein.)

Die Lichtausbreitung entlang der Laminatschichten 16c bis 16f erfolgt damit bevorzugt gegenüber einer Lichtausbreitung senkrecht zu den Laminatschichten 16c bis 16f. Die Orientierung der Laminatschichten 16c bis 16f zu einer Mitte der Lichtaustrittsfläche 20 bewirkt deshalb eine Lichtkonzentration des durch den Licht-Transmissionskörper 14 diffundierenden Lichts. Auch das optische Element der Fig. 2 eignet sich deshalb gut als Diffusor-Konzentrator.

Bezüglich weiterer Merkmale des optischen Elements 10 der Fig. 2 wird auf die vorhergehende Ausführungsform verwiesen.

Anstelle einer Schichtstruktur des Licht-Transmissionskörpers 14, wie anhand der vorhergehenden Beispiele erläutert, kann der Licht-Transmissionskörper 14 auch eine graduelle Variation der lokalen Diffusivität, beispielsweise mittels einer graduellen Variation der lokalen Konzentrationen von Streuzentren, aufweisen.

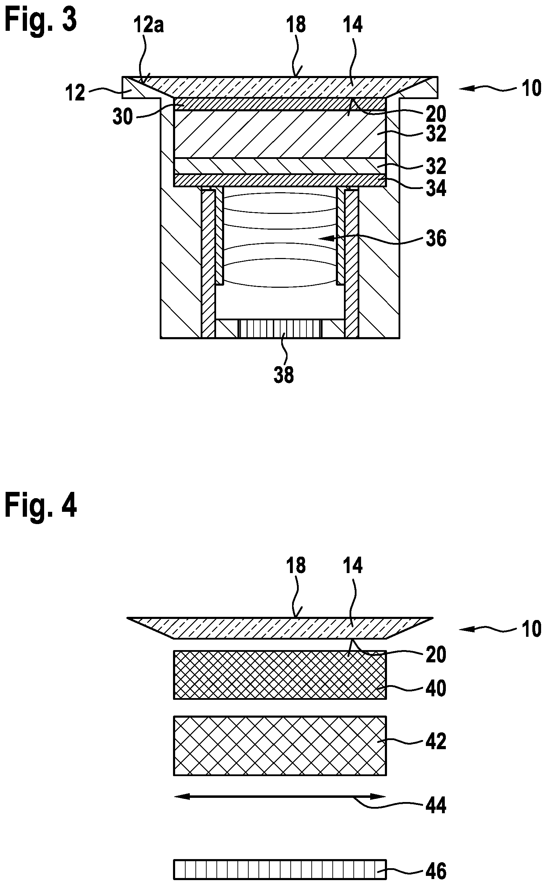

Fig. 3 zeigt eine schematische Darstellung einer ersten Ausführungsform eines Spektrometers.

Das in Fig. 3 schematisch dargestellte Spektrometer ist beispielhaft ein statisches Fourier-Transformationsspektrometer. Als Eingangsapertur weist das Spektrometer ein als Diffusor-Konzentrator ausgebildetes optisches Element 10 auf. (Alternativ kann ein derartiges optisches Element jedoch auch in einem Strahlengang eines Spektrometers/Mikrospektrometers eingesetzt sein.)

Benachbart zu der Lichtaustrittsfläche 20 des optischen Elements 10/seines Licht-Transmissionskörpers 14 ist ein Polarisator 30 angebracht, welcher das aus dem Licht-Transmissionskörper 14 austretende Licht (mit einem Winkel von 45° zur Bildebene) polarisiert. Dem Polarisator 30 nachgeordnet ist ein Savart-Element 32 aus zwei unterschiedlich orientierten doppelbrechenden Kristallen, welche das polarisierte Licht in ein (zur Bildebene) parallel/horizontal polarisiertes Strahlenbündel und ein (zur Bildebene) senkrecht/vertikal polarisiertes Strahlenbündel aufspalten. Beide Strahlenbündel durchlaufen je nach Polarisation und Einfallswinkel einen unterschiedlich langen Lichtweg durch die zwei doppelbrechenden Kristalle des Savart-Elements 32. Ein optischer Weglängenunterschied zwischen den beiden Strahlenbündeln ist somit von einem Einfallswinkel des aus dem optischen Element 10 austretenden Lichts abhängig. Anschließend projiziert ein weiterer Polarisator 34 die beiden Strahlenbündel wieder zusammen (mit einem Winkel von 45° zur Bildebene), damit das Licht beider Strahlenbündel miteinander interferieren kann. Im Anschluss bildet ein Linsensystem 36 alle Lichtstrahlen mit dem gleichen Einfallswinkel auf den gleichen Detektionsbereich eines Detektorarrays 38 ab. Je nach Phasenunterschied interferiert das Licht konstruktiv oder destruktiv. Man erhält somit mittels des Detektorarrays 38 ein 2D-Interferenzbild, aus dem mittels einer Fourier-Transformation ein Spektrum bestimmt werden kann.

Die Ausstattung des Spektrometers der Fig. 3 mit dem optischen Element 10 gewährleistet eine gleichmäßige Ausleuchtung der dem optischen Element 10 nachordneten Spektrometerkomponenten 30 bis 36. Aufgrund der Konzentrierung des auf die relativ große Lichteinsammelfläche 18 auftretenden Lichts auf die deutlich kleinere Lichtaustrittsfläche 20, kann das "lichtstarke" Spektrometer mit einem vergleichsweise kleinen Volumen hergestellt werden.

Fig. 4 zeigt eine schematische Darstellung einer zweiten Ausführungsform eines Spektrometers.

Der mittels der Fig. 4 wiedergegebene Spektrometertyp weist als Eingangsapertur das als Diffusor-Konzentrator ausgebildete optische Element 10 auf. (Auch bei diesem Spektrometertyp kann das optische Element 10 alternativ in einem Strahlengang eingesetzt sein.)

Das auftreffende Licht wird zuerst mittels des optischen Elements 10 gleichmäßig intensitäts- und winkelverteilt. Das aus dem optischen Element 10 austretende Licht wird optionaler Weise mittels eines Bandpassfilters 40 gefiltert. Dem (optionalen) Bandpassfilter 40 ist ein winkelabhängiges Filterelement 42, wie beispielsweise ein Fabry-Pérot-Filter 42, nachgeordnet. Mittels einer Linse 44 wird das aus dem winkelabhängigen Filterelement 42 austretende Licht anschließend so auf ein Detektorarray 46 abgebildet, dass unterschiedliche Einfallswinkel bzw. Wellenlängen auf unterschiedliche Detektionsbereiche des Detektorarrays 46 auftreffen.

Auch bei der Ausführungsform der Fig. 4 ermöglicht das optische Element 10 eine möglichst homogene Intensitäts- und Winkelverteilung.

Alle oben beschriebenen Spektrometer weisen aufgrund ihrer Ausstattung mit dem optischen Element 10 eine kompakte Bauweise auf. Durch die Vergrößerung der Lichteinsammelfläche 18 bei gleichbleibender Dimensionierung der nachfolgenden Bauteile kann mehr Licht eingesammelt werden. Alternativ kann auch durch die Verkleinerung der Lichtaustrittsfläche 20 (gegenüber der Lichteinsammelfläche 18) das jeweilige Spektrometer ohne nennenswerte Zusatzkosten minimiert werden.

Alle oben beschriebenen optischen Elemente und Spektrometer eignen sich aufgrund ihrer vergleichsweise geringen Größe gut zur Verwendung in einem Mobilgerät, wie beispielsweise einem Mobiltelefon oder einem Smartphone.

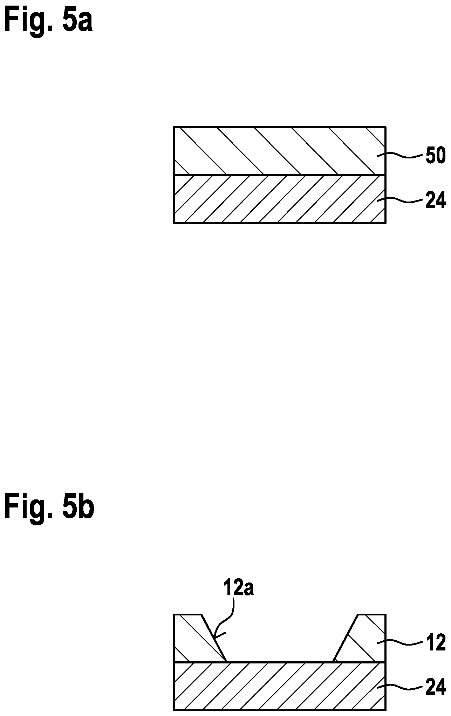

Fig. 5a bis 5f zeigen schematische Querschnitte zum Erläutern einer Ausführungsform des Herstellungsverfahrens für ein optisches Element zur Lichtkonzentration.

Bei einem Ausführen des hier beschriebenen Herstellungsverfahrens wird zuerst eine Haltehülse 12 des späteren optischen Elements derart geformt, dass ein Lichtdurchströmvolumen von mindestens einer reflektierenden Teiloberfläche 12a der Haltehülse 12 umrahmt ist. Dazu wird ein Hülsenmaterial 50, wie beispielsweise ein Halbleitermaterial (Silizium), ein Metall und/oder ein Kunststoff, auf einem Substrat 24 abgeschieden (siehe Fig. 5a). Vorzugsweise wird als Substrat 24 ein für den zur Lichtkonzentration vorgegebenen Wellenlängenbereich transmittierendes/transparentes Substrat 24 verwendet. In diesem Fall kann ein späteres Entfernen des Substrats 24 entfallen.

Fig. 5b zeigt ein Herausstrukturieren der Haltehülse 12 aus dem Hülsenmaterial 50. Das Strukturieren des Hülsenmaterials 50 kann beispielsweise mittels eines anisotropen Ätzvorgangs erfolgen.

Anstelle der in den Fig. 5a und 5b wiedergegebenen Verfahrensschritte kann die Haltehülse 12 auch mittels eines Spritzgusses, einer Drehverspannung, eines Prägeverfahrens, eines Fräsens, eines 3D-Druckens oder einer Graustufenlithographie hergestellt werden. Alternativ kann auch ein Waferstück genommen und anisotrop in die gewünschte Form einer Vielzahl von Haltehülsen 12 strukturiert werden.

Im Falle einer noch unzureichenden Reflektivität der mindestens einen das Lichtdurchströmvolumen umrahmenden reflektierenden Teiloberfläche 12a der Haltehülse 12 kann die mindestens eine Teiloberfläche 12a noch zusätzlich (insbesondere durch einen Reflow-Prozess) geglättet und/oder (z.B. durch Aufbringen mindestens einer reflektierenden Schicht) verspiegelt werden.

Mittels der weiteren Verfahrensschritte wird ein Licht-Transmissionskörper 14 des späteren optischen Elements 10 derart gebildet, dass der Licht-Transmissionskörper 14 zumindest für den vorgegebenen Wellenlängenbereich transmittierend ist. Dabei wird das Lichtdurchströmvolumen vollständig mit dem Licht-Transmissionskörper 14 gefüllt. Der Licht-Transmissionskörper 14 wird zumindest teilweise aus mindestens einem für den vorgegebenen Wellenlängenbereich diffusen Medium derart gebildet, dass der Licht-Transmissionskörper 14 zumindest einen ersten Teilbereich 16a mit (zumindest) einer ersten Diffusivität D1 und einen zweiten Teilbereich 16b mit (zumindest) einer von der ersten Diffusivität D1 abweichenden zweiten Diffusivität D2 aufweist. Beispielhaft wird bei der hier beschriebenen Ausführungsform der Licht-Transmissionskörper 14 nur mit den beiden Teilbereichen 16a und 16b mit insgesamt zwei unterschiedlichen Diffusivitäten D1 und D2 ausgebildet. Eine Ausführbarkeit des hier beschriebenen Herstellungsverfahrens ist jedoch nicht auf einen derartigen Licht-Transmissionskörper 14 limitiert.

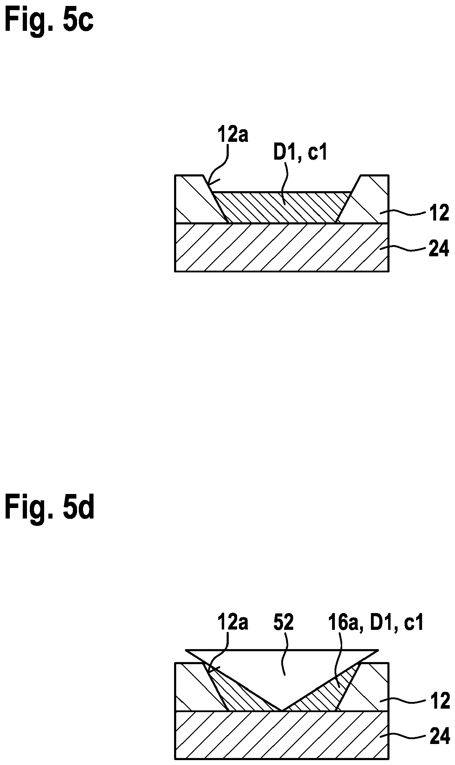

In der hier beschriebenen Ausführungsform wird zuerst, wie in Fig. 5c schematisch wiedergegeben ist, ein Matrixmaterial (beispielsweise PDMS) mit einer ersten (lokalen) Konzentration c1 von als Streuzentren eingesetzten streuenden Partikeln in das spätere Lichtdurchströmvolumen eingefüllt. Die streuenden Partikel können beispielsweise Titandioxid-Partikel sein.

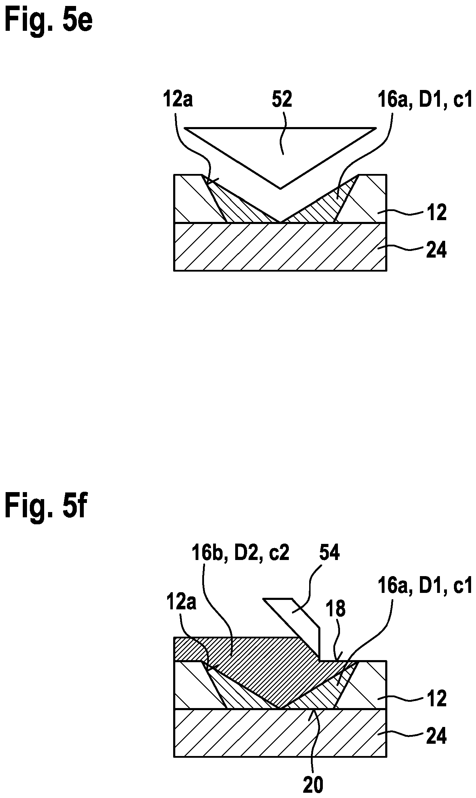

Fig. 5d zeigt einen Prägevorgang, mittels welchem der spätere erste Teilbereich 16a des Licht-Transmissionskörpers 14 in seine oben schon beschriebene Form gebracht wird. Der Prägevorgang kann leicht und verlässlich mittels aus der Nanoprägelithographie bekannten Techniken ausgeführt werden. Fig. 5e zeigt den geformten ersten Teilbereich 16a mit der ersten Diffusivität D1 nach einem Entfernen eines zur Prägung eingesetzten Stempels 52.

In einem weiteren Verfahrensschritt, welcher mittels der Fig. 5f schematisch wiedergegeben ist, wird das gleiche Matrixmaterial, jedoch mit einer von der ersten Konzentration c1 abweichenden zweiten Konzentration c2 von streuenden Partikeln, in einen noch nicht aufgefüllten Rest des Lichtdurchströmvolumens eingefüllt. Mittels einer Rakel 54 kann für eine glatte Lichteinsammelfläche 18 des auf diese Weise fertiggestellten Licht-Transmissionskörpers 14 gesorgt werden. Evtl. kann das Substrat 24 dann entfernt werden.

Die oben erläuterten Verfahrensschritte können auch auf Wafer-Level ausgeführt werden. In einer Weiterbildung des mittels der Fig. 5a bis 5f schematisch wiedergegebenen Herstellungsverfahrens können mehrere Prägeschritte ausgeführt werden, um die in Fig. 2 dargestellte Lamellenstruktur zu erzeugen.

Die oben beschriebene Verwendung von streuenden Partikeln als zufällig verteilte Streuzentren ist nur beispielhaft zu verstehen. Eine (lokale) Konzentration c1 oder c2 von Streuzentren in dem Licht-Transmissionskörper 14 kann beispielsweise mittels einer Monte-Carlo-Simulation einer gewünschten Lichtausbreitung festgelegt werden. Je größer der Quotient aus dem ersten Flächeninhalt der Lichteinsammelfläche 18 geteilt durch den zweiten Flächeninhalt der Lichtaustrittsfläche 20 ist und je kleiner ein Abstand zwischen der Lichteinsammelfläche 18 und der Lichtaustrittsfläche 20 ist, desto vorteilhafter in ein starker Diffusivitätskontrast.

## Patentansprüche

1. Optisches Element (10) zur Lichtkonzentration für einen vorgegebenen Wellenlängenbereich mit:
einer Haltehülse (12), welche derart geformt ist, dass ein Lichtdurchströmvolumen von mindestens einer reflektierenden Teiloberfläche (12a) der Haltehülse (12) umrahmt ist; und
einem Licht-Transmissionskörper (14), mit welchem das Lichtdurchströmvolumen vollständig gefüllt ist und welcher zumindest für den vorgegebenen Wellenlängenbereich transmittierend ist, wobei der Licht-Transmissionskörper (14) auf einer ersten Seite eine Lichteinsammelfläche (18) mit einem ersten Flächeninhalt und auf einer zweiten Seite eine Lichtaustrittsfläche (20) mit einem zweiten Flächeninhalt kleiner als dem ersten Flächeninhalt aufweist;
wobei der Licht-Transmissionskörper (14) zumindest teilweise aus mindestens einem für den vorgegebenen Wellenlängenbereich diffusen Medium gebildet ist, und zumindest einen ersten Teilbereich (16a) mit zumindest einer ersten Diffusivität (D1, D3 bis D6) und einen zweiten Teilbereich (16b) mit zumindest einer von der ersten Diffusivität (D1, D3 bis D6) abweichenden zweiten Diffusivität (D2) aufweist und
wobei mindestens eine sich von der Lichteinsammelfläche (18) zu der Lichtaustrittsfläche (20) erstreckende und den Licht-Transmissionskörper (14) schneidende Mittellängsachse (22) definierbar ist, und wobei die Diffusivitätsverteilung des Licht-Transmissionskörpers (14) bezüglich der Mittellängsachse (22) rotationssymmetrisch ist,
**dadurch gekennzeichnet, dass**
der erste Teilbereich (16a) mit der ersten Diffusivität (D1, D3 bis D6) an der Lichtaustrittsfläche (20) liegt und eine variierende Schichtdicke, welche an der Mittellängsachse (22) minimal und an der mindestens einen reflektierenden Teiloberfläche (12a) maximal ist, aufweist, und wobei der zweite Teilbereich (16b) mit zumindest der zweiten Diffusivität (D2) an der Lichteinsammelfläche (18) liegt und eine variierende Schichtdicke, welche an der Mittellängsachse (22) maximal und an der mindestens einen reflektierenden Teiloberfläche (12a) minimal ist, aufweist.

2. Optisches Element (10) nach Anspruch 1, wobei der zweite Teilbereich (16b) des Licht-Transmissionskörpers (14) eine Laminatstruktur aus um die Mittellängsachse (22) verlaufenden Laminatschichten (16c bis 16f) mit unterschiedlichen Diffusivitäten (D3 bis D6) aufweist.

3. Optisches Element (10) nach einem der vorhergehenden Ansprüche, wobei der Licht-Transmissionskörper (14) zumindest teilweise aus mindestens einem für den vorgegebenen Wellenlängenbereich transmittierenden Matrixmaterial, welches mit den vorgegebenen Wellenlängenbereich streuenden Partikeln und/oder Gasblasen vermischt ist, als dem mindestens einen für den vorgegebenen Wellenlängenbereich diffusen Medium gebildet ist.

4. Optisches Element (10) nach Anspruch 3, wobei der Licht-Transmissionskörper (14) PDMS, PMMA und/oder SU8 als das mindestens eine für den vorgegebenen Wellenlängenbereich transmittierende Matrixmaterial und/oder Titandioxid-Partikel, Siliziumdioxid-Partikel, Melaminharz-Partikel und/oder Polystyrol-Partikel als die den vorgegebenen Wellenlängenbereich streuenden Partikel aufweist.

5. Optisches Element (10) nach einem der Ansprüche 1 und 2, wobei der Licht-Transmissionskörper (14) zumindest teilweise aus mindestens einem porösen Material als dem mindestens einen für den vorgegebenen Wellenlängenbereich diffusen Medium gebildet ist.

6. Spektrometer mit einem optischen Element (10) nach einem der vorhergehenden Ansprüche.

7. Mobilgerät mit einem optischen Element (10) nach einem der Ansprüche 1 bis 5 und/oder einem Spektrometer nach Anspruch 6.

8. Herstellungsverfahren für ein optisches Element (10) zur Lichtkonzentration für einen vorgegebenen Wellenlängenbereich mit den Schritten:
Bilden einer Haltehülse (12), welche derart geformt wird, dass ein Lichtdurchströmvolumen von mindestens einer reflektierenden Teiloberfläche (12a) der Haltehülse (12) umrahmt ist; und
Bilden eines Licht-Transmissionskörpers (14) derart, dass der Licht-Transmissionskörper (14) zumindest für den vorgegebenen Wellenlängenbereich transmittierend ist und dass der Licht-Transmissionskörper (14) auf einer ersten Seite eine Lichteinsammelfläche (18) mit einem ersten Flächeninhalt und auf einer zweiten Seite eine Lichtaustrittsfläche (20) mit einem zweiten Flächeninhalt kleiner als dem ersten Flächeninhalt aufweist;
wobei das Lichtdurchströmvolumen vollständig mit dem Licht-Transmissionskörper (14) gefüllt wird und
wobei der Licht-Transmissionskörper (14) zumindest teilweise aus mindestens einem für den vorgegebenen Wellenlängenbereich diffusen Medium derart gebildet wird, dass der Licht-Transmissionskörper (14) zumindest einen ersten Teilbereich (16a) mit zumindest einer ersten Diffusivität (D1, D3 bis D6) und einen zweiten Teilbereich (16b) mit zumindest einer von der ersten Diffusivität (D1, D3 bis D6) abweichenden zweiten Diffusivität (D2) aufweist und dass mindestens eine sich von der Lichteinsammelfläche (18) zu der Lichtaustrittsfläche (20) erstreckende und den Licht-Transmissionskörper (14) schneidende Mittellängsachse (22) definierbar ist, und die Diffusivitätsverteilung des Licht-Transmissionskörpers (14) bezüglich der Mittellängsachse (22) rotationssymmetrisch ist,
**dadurch gekennzeichnet, dass**
der Licht-Transmissionskörper (14) derart gebildet wird, dass der erste Teilbereich (16a) mit der ersten Diffusivität (D1, D3 bis D6) an der Lichtaustrittsfläche (20) liegt und eine variierende Schichtdicke, welche an der Mittellängsachse (22) minimal und an der mindestens einen reflektierenden Teiloberfläche (12a) maximal ist, aufweist, und dass der zweite Teilbereich (16b) mit zumindest der zweiten Diffusivität (D2) an der Lichteinsammelfläche (18) liegt und eine variierende Schichtdicke, welche an der Mittellängsachse (22) maximal und an der mindestens einen reflektierenden Teiloberfläche (12a) minimal ist, aufweist.

## Claims

1. Optical element (10) for light concentration for a predetermined wavelength range, having:
a holding sleeve (12), which is shaped in such a way that a light passage volume is framed by at least one reflective partial surface (12a) of the holding sleeve (12); and
a light transmission body (14), with which the light passage volume is completely filled and which is transmissive at least for the predetermined wavelength range, wherein the light transmission body (14) has a light collection surface (18) with a first area content on a first side and a light exit surface (20) with a second area content, which is less than the first area content, on a second side;
wherein the light transmission body (14) is formed at least partially from at least one medium which is diffuse for the predetermined wavelength range and has at least a first subregion (16b) with at least a first diffusivity (D1, D3 to D6) and a second subregion (16a) with at least a second diffusivity (D2), which is different from the first diffusivity (D1, D3 to D6), and
wherein at least one central longitudinal axis (22) extending from the light collection surface (18) to the light exit surface (20) and intersecting the light transmission body (14) can be defined, and wherein the diffusivity distribution of the light transmission body (14) is rotationally symmetrical with respect to the central longitudinal axis (22),
**characterized in that**
the first subregion (16b) with the first diffusivity (D1, D3 to D6) lies on the light exit surface (20) and has a varying layer thickness, which is minimal on the central longitudinal axis (22) and maximal on the at least one reflective partial surface (12a), and wherein the second subregion (16a) with at least the second diffusivity (D2) lies on the light collection surface (18) and has a varying layer thickness, which is maximal on the central longitudinal axis (22) and minimal on the at least one reflective partial surface (12a).

2. Optical element (10) according to Claim 1, wherein the second subregion (16a) of the light transmission body (14) has a laminate structure consisting of laminate layers (16c to 16f) with different diffusivities (D3 to D6) extending around the central longitudinal axis (22).

3. Optical element (10) according to one of the preceding claims, wherein the light transmission body (14) is formed at least partially from at least one matrix material which is transmissive for the predetermined wavelength range and is mixed with particles and/or gas bubbles which scatter the predetermined wavelength range as the at least one medium which is diffuse for the predetermined wavelength range.

4. Optical element (10) according to Claim 3, wherein the light transmission body (14) has PDMS, PMMA and/or SU8 as the at least one matrix material which is transmissive for the predetermined wavelength range, and/or titanium dioxide particles, silicon dioxide particles, melamine resin particles and/or polystyrene particles as the particles that scatter the predetermined wavelength range.

5. Optical element (10) according to either of Claims 1 and 2, wherein the light transmission body (14) is formed at least partially from at least one porous material as the at least one medium which is diffuse for the predetermined wavelength range.

6. Spectrometer having an optical element (10) according to one of the preceding claims.

7. Mobile apparatus having an optical element (10) according one of Claims 1 to 5 and/or a spectrometer according to Claim 6.

8. Production method for an optical element (10) for light concentration for a predetermined wavelength range, comprising the steps of:
forming a holding sleeve (12), which is shaped in such a way that a light passage volume is framed by at least one reflective partial surface (12a) of the holding sleeve (12); and
forming a light transmission body (14) in such a way that the light transmission body (14) is transmissive at least for the predetermined wavelength range and that the light transmission body (14) has a light collection surface (18) with a first area content on a first side and a light exit surface (20) with a second area content, which is less than the first area content, on a second side;
wherein the light passage volume is completely filled with the light transmission body (14) and
wherein the light transmission body (14) is formed at least partially from at least one medium which is diffuse for the predetermined wavelength range in such a way that the light transmission body (14) has at least a first subregion (16b) with at least a first diffusivity (D1, D3 to D6) and a second subregion (16a) with at least a second diffusivity (D2), which is different from the first diffusivity (D1, D3 to D6), and that at least one central longitudinal axis (22) extending from the light collection surface (18) to the light exit surface (20) and intersecting the light transmission body (14) can be defined, and the diffusivity distribution of the light transmission body (14) is rotationally symmetrical with respect to the central longitudinal axis (22),
**characterized in that**
the light transmission body (14) is formed in such a way that the first subregion (16b) with the first diffusivity (D1, D3 to D6) lies on the light exit surface (20) and has a varying layer thickness, which is minimal on the central longitudinal axis (22) and maximal on the at least one reflective partial surface (12a), and that the second subregion (16a) with at least the second diffusivity (D2) lies on the light collection surface (18) and has a varying layer thickness, which is maximal on the central longitudinal axis (22) and minimal on the at least one reflective partial surface (12a).

## Revendications

1. Elément optique (10) destiné à concentrer la lumière pour une plage de longueurs d'onde prédéfinie, comprenant :
une douille de retenue (12) qui est formée de telle sorte qu'un volume de traversée de lumière est encadré par au moins une surface partielle réfléchissante (12a) de la douille de retenue (12) ; et
un corps de transmission de lumière (14) qui remplit entièrement le volume de traversée de lumière et qui est transmetteur au moins pour la plage de longueurs d'onde prédéfinie, dans lequel le corps de transmission de lumière (14) présente sur un premier côté une surface collectrice de lumière (18) ayant une première superficie, et présente sur un deuxième côté une surface de sortie de lumière (20) ayant une deuxième superficie inférieure à la première superficie ;
dans lequel le corps de transmission de lumière (14) est au moins en partie formé à partir d'au moins un milieu diffus pour la plage de longueurs d'onde prédéfinie, et présente au moins une première zone partielle (16a) ayant au moins une première diffusivité (D1, D3 à D6) et une deuxième zone partielle (16b) ayant au moins une deuxième diffusivité (D2) différente de la première diffusivité (D1, D3 à D6), et
dans lequel au moins un axe longitudinal médian (22) s'étendant de la surface collectrice de lumière (18) à la surface de sortie de lumière (20) et intersectant le corps de transmission de lumière (14) peut être défini, et dans lequel la distribution de diffusivité du corps de transmission de lumière (14) est à symétrie de révolution par rapport à l'axe longitudinal médian (22), **caractérisé en ce que**
la première zone partielle (16a) ayant la première diffusivité (D1, D3 à D6) est adjacente à la surface de sortie de lumière (20) et présente une épaisseur de couche variable qui est minimale au niveau de l'axe longitudinal médian (22) et est maximale au niveau de ladite au moins une surface partielle réfléchissante (12a), et dans laquelle a deuxième zone partielle (16b) ayant au moins la deuxième diffusivité (D2) est adjacente à la surface collectrice de lumière (18) et présente une épaisseur de couche variable qui est maximale au niveau de l'axe longitudinal médian (22) et est minimale au niveau de ladite au moins une surface partielle réfléchissante (12a).

2. Elément optique (10) selon la revendication 1, dans lequel la deuxième zone partielle (16b) du corps de transmission de lumière (14) présente une structure stratifiée composée de couches stratifiées (16c à 16f) s'étendant autour de l'axe longitudinal médian (22) et ayant différentes diffusivités (D3 à D6).

3. Elément optique (10) selon l'une quelconque des revendications précédentes, dans lequel le corps de transmission de lumière (14) est formé au moins en partie à partir d'au moins un matériau de matrice transmetteur pour la plage de longueurs d'onde prédéfinie et qui est mélangé avec des particules et/ou des bulles de gaz diffusant la plage de longueurs d'onde prédéfinie, en tant qu'au moins un milieu diffus pour la plage de longueurs d'onde prédéfinie.

4. Elément optique (10) selon la revendication 3, dans lequel le corps de transmission de lumière (14) présente du PDMS, du PMMA et/ou du SU8 en tant qu'au moins un matériau de matrice transmetteur pour la plage de longueurs d'onde prédéfinie, et/ou des particules de dioxyde de titane, des particules de dioxyde de silicium, des particules de mélamine et/ou des particules de polystyrène en tant que particules diffusant la plage de longueur d'ondes prédéfinie.

5. Elément optique (10) selon l'une quelconque des revendications 1 et 2, dans lequel le corps de transmission de lumière (14) est formé au moins en partie à partir d'au moins un matériau poreux en tant qu'au moins un milieu diffus pour la plage de longueurs d'onde prédéfinie.

6. Spectromètre comprenant un élément optique (10) selon l'une quelconque des revendications précédentes.

7. Appareil mobile comprenant un élément optique (10) selon l'une quelconque des revendications 1 à 5 et/ou un spectromètre selon la revendication 6.

8. Procédé de fabrication pour un élément optique (10) destiné à concentrer la lumière pour une plage de longueurs d'onde prédéfinie, comprenant les étapes consistant à :
former une douille de retenue (12) qui est formée de telle sorte qu'un volume de traversée de lumière est encadré par au moins une surface partielle réfléchissante (12a) de la douille de retenue (12) ; et
former un corps de transmission de lumière (14) de telle sorte que le corps de transmission de lumière (14) est transmetteur pour la plage de longueurs d'onde prédéfinie, et que le corps de transmission de lumière (14) présente sur un premier côté une surface collectrice de lumière (18) ayant une première superficie, et présente sur un deuxième côté une surface de sortie de lumière (20) ayant une deuxième superficie inférieure à la première superficie ;
dans lequel le volume de traversée de lumière est entièrement rempli avec le corps de transmission de lumière (14), et
dans lequel le corps de transmission de lumière (14) est au moins partiellement formé à partir d'au moins un milieu diffus pour la plage de longueurs d'onde prédéfinie, le corps de transmission de lumière (14) présente au moins une première zone partielle (16a) ayant au moins une première diffusivité (D1, D3 à D6) et une deuxième zone partielle (16b) ayant au moins une deuxième diffusivité (D2) différente de la première diffusivité (D1, D3 à D6), et au moins un axe longitudinal médian (22) s'étendant de la surface collectrice de lumière (18) à la surface de sortie de lumière (20) et intersectant le corps de transmission de lumière (14) peut être défini, et la distribution de diffusivité du corps de transmission de lumière (14) est à symétrie de révolution par rapport à l'axe longitudinal médian (22),
**caractérisé en ce que**
le corps de transmission de lumière (14) est formé de telle sorte que la première zone partielle (16a) ayant la première diffusivité (D1, D3 à D6) est adjacente à la surface de sortie de lumière (20) et présente une épaisseur de couche variable qui est minimale au niveau de l'axe longitudinal médian (22) et est maximale au niveau de ladite au moins une surface partielle réfléchissante (12a), et que a deuxième zone partielle (16b) ayant la deuxième diffusivité (D2) est adjacente à la surface collectrice de lumière (18) et présente une épaisseur de couche variable qui est maximale au niveau de l'axe longitudinal médian (22) et est minimale au niveau de ladite au moins une surface partielle réfléchissante (12a).
